# EUROPÄISCHE PATENTSCHRIFT

(11) **EP 1 858 732 B1**
(45) Veröffentlichungstag und Bekanntmachung des Hinweises auf die Patenterteilung: **11.04.2012**
(21) Anmeldenummer: 06707692.7
(22) Anmeldetag: 10.01.2006
(51) Int. Cl.: B60R 25/00

(54) **Elektrisches oder elektronisches Gerät**
Electrical or electronic device
Dispositif électrique ou électronique

(30) Priorität: 15.03.2005 DE 102005012215
(43) Veröffentlichungstag der Anmeldung: 28.11.2007
(73) Patentinhaber: Continental Automotive GmbH, 30165 Hannover (DE)
(72) Erfinder: HAUTVAST, Heinz-josef, 78086 Brigachtal (DE)
(86) Internationale Anmeldenummer: PCT/EP2006/050122
(87) Internationale Veröffentlichungsnummer: WO 2006/097365

(56) Entgegenhaltungen:
- EP-A- 0 511 494
- WO-A-99/08910
- DE-A1- 19 822 294
- FR-A- 2 591 973
- US-A- 5 900 823

## Beschreibung

Die Erfindung bezieht sich auf ein elektrisches oder elektronisches Gerät, das mit einer Identifikationsinformation versehen ist, wobei das Gerät eine nicht ausreichende Größe zur Anbringung der Identifikation in lesbarer Größe aufweist.

Insbesondere elektronische Geräte, die bei Behörden zugelassen werden müssen, benötigen ein Typenschild, das bestimmte Identifikationsdaten enthält. Diese Geräte, die z.B. in einem Kraftfahrzeug eingebaut sein können, werden immer kleiner und kompakter und sind in Bezug auf ihre Funktion hoch integriert. Daraus ergibt sich, dass die nach dem Einbau leicht einsehbaren Flächen des Gerätes meist von Schnittstellen, Tasten, Displays und Ausgabeeinrichtungen wie z.B. Drucker belegt sind, so dass kein ausreichender Platz zur Anbringung eines Typenschildes vorhanden ist, der eine Darstellung der Identifikationsdaten in einer noch lesbaren Größe ermöglicht.

Aus der FR-A-2 591 973 ist ein Kraftfahrzeug bekannt, das eine Zentralelektronik für eine Antidiebstahleinheit mit einem Speicher aufweist, in dem die Zulassungsnummer des Kraftfahrzeugs gespeichert ist. Die Zentralelektronik ist mit einer Anzeige an einer Scheibe des Kraftfahrzeugs verbunden, durch die die Zulassungsnummer darstellbar ist.

Die DE-A-100 39 778 beschreit ein Kraftfahrzeug bei dem mehrere Komponenten Kraftfahrzeugspezifische Identifikations- codes aufweisen.

Aufgabe der Erfindung ist es daher ein elektriches oder elektroniches Gerät der eingangs genannten Art zu schaffen, das selbst bei geringer Baugröße des Gegenstandes eine Darstellung der Identifikationsdaten in einer gut lesbaren Größe ermöglicht.

Diese Aufgabe wird erfindungsgemäß dadurch ein Gerät mit dem Merkmalen des Anspruchs 1 gelöst.

Weist das elektrische oder elektronische Gerät bereits ein Anzeigegerät für andere Zwecke auf, kann dieses auch zur Darstellung der Identifikationsdaten herangezogen werden, so dass dafür kein besonderer Platz an dem Gegenstand benötigt wird.

Die Größe der Darstellung der Identifikationsdaten durch das Anzeigegerät ist aber unabhängig von dem an dem Gegenstand vorhandenen Platz.

Um eine Manipulation der Identifikationsdaten zu vermeiden, kann der Speicher ein Nur-Lese-Speicher (ROM) sein.

Dazu kann weiterhin auch die Identifikationsinformation verschlüsselt, insbesondere kryptographisch verschlüsselt in dem Speicher gespeichert sein und das Anzeigegerät eine Entschlüsselungsstufe zum Entschlüsseln der Identifikationsinformation enthalten.

Vorzugsweise besitzt das Anzeigegerät ein elektrooptisches Anzeigefeld, auf dem die Identifikationsinformation darstellbar ist.

Wenn die Identifikationsinformation nicht permanent zur Verfügung stehen muß, kann sie auf Abruf durch das Anzeigegerät darstellbar sein.

Der Gegenstand und/oder das Anzeigegerät kann eine Schnittstelle besitzen, an die eine Anzeigeeinheit anschließbar ist.

Dies ermöglicht, dass das Anzeigegerät eine nur bedarfsweise anschließbare Anzeigeeinheit ist. Es kann aber auch eine zusätzlich zum Anzeigegerät anschließbare Anzeigeeinheit möglich sein. Damit können Kontrollorgane wie z.B. die Polizei ein eigenes Anzeigegerät anschließen und die Identität des Gegenstands überprüfen. Vorzugsweise ist dabei die weitere Anzeigeeinheit ein Personal Computer (PC).

Von besonderem Vorteil ist es, wenn das elektrische oder elektronische Gerät ein elektrisches oder elektronisches Gerät eines Kraftfahrzeugs und das Anzeigegerät ein insbesondere in der Armaturentafel des Kraftfahrzeugs angeordnetes Anzeigeinstrument ist.

Damit können die zu identifizierenden Geräte auch an schlecht zugänglichen Stellen im Kraftfahrzeug eingebaut sein und trotzdem auf ihre Identität überprüft werden.

Da in heutigen Anzeigeinstrumenten die darzustellenden Informationen meist benutzermenügesteuert angezeigt werden können, kann auch die Informationsdarstellung der Identifikationsinformation ein Punkt des Benutzermenüs sein.

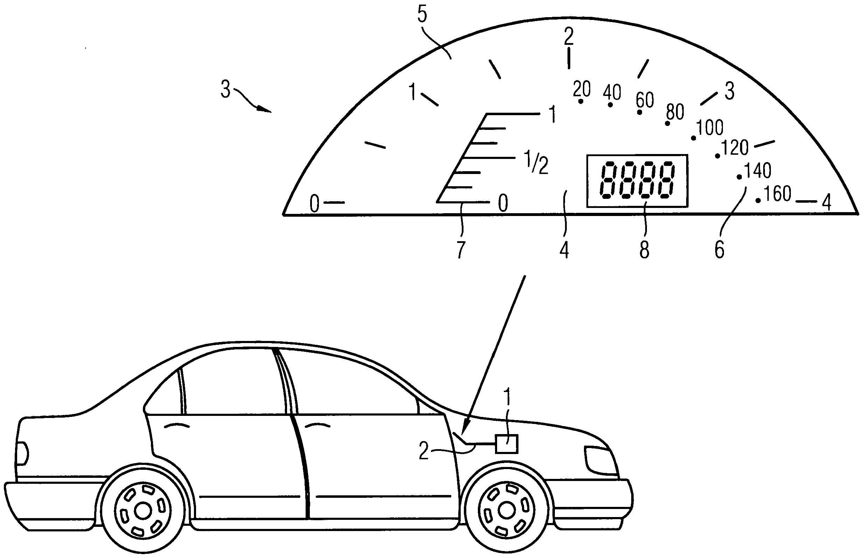

Ein Ausführungsbeispiel der Erfindung ist in der Zeichnung dargestellt. Die einzige Figur der Zeichnung zeigt eine Seitenansicht eines Kraftfahrzeugs mit einem vergrößert separat herausgezogenen Anzeigeinstrument.

In der einzigen Figur der Zeichnung ist ein Kraftfahrzeug schematisch dargestellt, in dessen Frontbereich ein als Box dargestelltes elektronisches Gerät 1 eingebaut ist. Für dieses Gerät 1 ist eine behördliche Zulassung erforderlich, deren Daten als Identifikationsinformation in einem in dem Gerät 1 integrierten Nur-Lese-Speicher (ROM) kryptographisch verschlüsselt gespeichert sind.

Über eine Leitung 2 ist das Gerät 1 mit einem Anzeigeinstrument 3 verbunden, das in der Armaturentafel des Kraftfahrzeugs angeordnet ist. In der Figur ist dieses Anzeigeinstrument 3 separat vergrößert dargestellt.

Die Anzeigefläche 4 des Anzeigeinstruments 3 weist eine Geschwindigkeitsskala 5, eine Drehzahlskala 6, eine Tankfüllstandsanzeige 7 sowie ein als Flüssigkristallanzeige ausgebildetes Anzeigefeld 8 auf.

Auf dem Anzeigefeld 8 können benutzermenügesteuert die verschiedensten Informationen dargestellt werden. Ein Punkt des Benutzermenüs ist nach Entschlüsselung die Darstellung der von dem Gerät 1 über die Leitung 2 zugeführte Identifikationsinformation des Gerätes 1.

## Patentansprüche

1. Elektrisches oder elektronisches Gerät, welches bei Behörden zugelassen werden muss und das mit einer Identifikationsinformation versehen ist und wobei das Gerät eine derartige Größe aufweist, dass kein ausreichender Platz zur Anbringung eines Typenschildes vorhanden ist, der eine Darstellung der Identifikationsdaten in einer noch lesbaren Größe ermöglicht ist, **dadurch gekennzeichnet,**
**dass** das elektrische oder elektronische Gerät (1) einen elektronischen Speicher enthält, in dem die Identifikationsinformation des elektrischen oder elektronischen Gerätes (1) gespeichert ist, wobei der Speicher mit einem an anderer Stelle als das elektrische oder elektronische Gerät (1) angeordneten Anzeigegerät verbunden oder verbindbar ist, durch das die Identifikationsinformation darstellbar ist.

2. Elektrisches oder elektronisches Gerät (1) nach Anspruch 1, **dadurch gekennzeichnet, daß** der Speicher ein Nur-Lese-Speicher (ROM) ist.

3. Elektrisches oder elektronisches Gerät (1) nach einem der vorhergehenden Ansprüche, **dadurch gekennzeichnet, daß** die Identifikationsinformation verschlüsselt in dem Speicher gespeichert ist und das Anzeigegerät eine Entschlüsselungsstufe zum Entschlüsseln der Identifikationsinformation enthält.

4. Elektrisches oder elektronisches Gerät (1) nach Anspruch 3, **dadurch gekennzeichnet, daß** die Identifikationsinformation kryptographisch verschlüsselt in dem Speicher gespeichert ist.

5. Elektrisches oder elektronisches Gerät (1) nach einem der vorhergehenden Ansprüche, **dadurch gekennzeichnet, daß** das Anzeigegerät ein elektrooptisches Anzeigefeld (8) besitzt, auf dem die Identifikationsinformation darstellbar ist.

6. Elektrisches oder elektronisches Gerät (1) nach einem der vorhergehenden Ansprüche, **dadurch gekennzeichnet, daß** die Identifikationsinformation auf Abruf durch das Anzeigegerät darstellbar ist.

7. Elektrisches oder elektronisches Gerät (1) nach einem der vorhergehenden Ansprüche, **dadurch gekennzeichnet, daß** das elektrische oder elektronische Gerät (1) und/oder das Anzeigegerät eine Schnittstelle besitzt, an die eine Anzeigeeinheit anschließbar ist.

8. Elektrisches oder elektronisches Gerät (1) nach Anspruch 7, **dadurch gekennzeichnet, daß** die weitere Anzeigeeinheit ein Personal Computer (PC) ist.

9. Elektrisches oder elektronisches Gerät (1) nach einem der vorhergehenden Ansprüche, **dadurch gekennzeichnet, daß** das elektrische oder elektronische Gerät (1) eine Komponente eines Kraftfahrzeugs und das Anzeigegerät insbesondere ein in der Armaturentafel des Kraftfahrzeugs angeordnetes Anzeigeinstrument (3) ist.

10. Elektrisches oder elektronisches Gerät (1) nach Anspruch 9, **dadurch gekennzeichnet, daß** von dem Anzeigeinstrument (3) Informationen benutzermenügesteuert darstellbar sind und der Informationsdarstellung ein Punkt des Benutzermenüs ist.

## Claims

1. Electrical or electronic device, which has to be approved by authorities and is provided with an item of identification information, and wherein the device is of a size such that insufficient space is available for the type plate to be mounted, a presentation of the identification data is permitted in a size which can still be read, **characterized in that** the electrical or electronic device (1) contains an electronic memory in which the item of identification information of the electrical or electronic device (1) is stored, wherein the memory is connected or can be connected to a display device which is arranged at a different location than the electrical or electronic device (1) by means of which the item of identification information can be displayed.

2. Electrical or electronic device (1) according to Claim 1, **characterized in that** the memory is a read-only memory (ROM).

3. Electrical or electronic device (1) according to one of the preceding claims, **characterized in that** the item of identification information is stored encoded in the memory, and the display device contains a decoding stage for decoding the item of identification information.

4. Electrical or electronic device (1) according to Claim 3, **characterized in that** the item of identification information is stored cryptographically encoded in the memory.

5. Electrical or electronic device (1) according to one of the preceding claims, **characterized in that** the display device has an electro-optical display panel (8) on which the item of identification information can be displayed.

6. Electrical or electronic device (1) according to one of the preceding claims, **characterized in that** the item of identification information can be displayed by the display device when called.

7. Electrical or electronic device (1) according to one of the preceding claims, **characterized in that** the electrical or electronic device (1) and/or the display device has an interface to which a display unit can be connected.

8. Electrical or electronic device (1) according to Claim 7, **characterized in that** the further display unit is a personal computer (PC).

9. Electrical or electronic device (1) according to one of the preceding claims, **characterized in that** the electrical or electronic device (1) is a component of a motor vehicle, and the display device is, in particular, a display instrument (3) which is arranged in the dashboard of the motor vehicle.

10. Electrical or electronic device (1) according to Claim 9, **characterized in that** information can be displayed by the display instrument (3) under the control of a user menu, and to the information display is an item on the user menu.

## Revendications

1. Appareil (1) électrique ou électronique, qui doit être autorisé auprès des autorités et qui est pourvu d'une information d'identification et dans lequel l'appareil a une dimension telle qu'il n'y a pas suffisamment de place pour l'apposition d'une plaque indicatrice, du type rendant possible une représentation des données d'identification en une grandeur encore lisible, **caractérisé en ce que** l'appareil (1) électrique ou électronique comporte une mémoire électronique, dans laquelle l'information d'identification de l'appareil (1) électrique ou électronique est mémorisée, la mémoire étant reliée à un appareil d'affichage, disposé en un point autre que l'appareil (1) électrique ou électronique ou pouvant lui être relié, par lequel l'information d'identification peut être représentée.

2. Appareil (1) électrique ou électronique suivant la revendication 1, **caractérisé en ce que** la mémoire est une mémoire à lecture seulement (ROM).

3. Appareil (1) électrique ou électronique suivant l'une des revendications précédentes, **caractérisé en ce que** l'information d'identification est mémorisée de manière chiffrée dans la mémoire et l'appareil d'affichage comporte un étage de déchiffrement pour le déchiffrement de l'information d'identification.

4. Appareil (1) électrique ou électronique suivant la revendication 3, **caractérisé en ce que** l'information d'identification est mémorisée de manière chiffrée cryptographiquement dans la mémoire.

5. Appareil (1) électrique ou électronique suivant l'une des revendications précédentes, **caractérisé en ce que** l'appareil d'affichage possède un champ (8) d'affichage électrooptique sur lequel l'information d'identification peut être représentée.

6. Appareil (1) électrique ou électronique suivant l'une des revendications précédentes, **caractérisé en ce que** l'information d'identification peut, sur appel, être représentée par l'appareil d'affichage.

7. Appareil (1) électrique ou électronique suivant l'une des revendications précédentes, **caractérisé en ce que** l'appareil (1) électrique ou électronique et/ou l'appareil d'affichage possède une interface, à laquelle une unité d'affichage peut être raccordée.

8. Appareil (1) électrique ou électronique suivant la revendication 7, **caractérisé en ce que** l'autre unité d'affichage est un ordinateur personnel (PC).

9. Appareil (1) électrique ou électronique suivant l'une des revendications précédentes, **caractérisé en ce que** l'appareil (1) électrique ou électronique est un élément d'un véhicule automobile et l'appareil d'affichage est, notamment, un instrument (3) d'affichage, disposé dans le tableau de bord du véhicule automobile.

10. Appareil (1) électrique ou électronique suivant la revendication 9, **caractérisé en ce que** des informations peuvent être représentées, en étant commandées par menu d'utilisateur, par l'instrument (3) d'affichage et la représentation d'information est un point du menu utilisateur.
